# EUROPEAN PATENT SPECIFICATION

(11) **EP 2 305 520 B1**
(45) Date of publication and mention of the grant of the patent: **17.12.2014**
(21) Application number: 10251652.3
(22) Date of filing: 27.09.2010
(51) Int. Cl.: B60R 21/16, B62J 7/00

(54) **Airbag device for saddle-ride type vehicle**
Airbagsvorrichtung für ein Motorrad
Dispositif d'airbag pour véhicule à monture à selle

(30) Priority: 30.09.2009 JP 2009228942
(43) Date of publication of application: 06.04.2011
(73) Proprietor: Honda Motor Co., Ltd., Minato-ku Tokyo 107-8556 (JP)
(72) Inventor: Kobayashi, Yuki, Wako-shi, Saitama 351-0193 (JP); Makabe, Takumi, Wako-shi, Saitama 351-0193 (JP); Miyakawa, Futoshi, Wako-shi, Saitama 351-0193 (JP)
(74) Representative: Stevens, Jason Paul

(56) References cited:
- DE-A1- 10 320 738
- DE-A1- 19 913 906
- FR-A1- 2 936 470
- US-A1- 2007 075 533
- US-A1- 2008 238 056

## Description

The present invention relates to airbag devices for saddle-ride type vehicles.

Airbag devices for saddle-ride type vehicles are known, which include an acceleration sensor for an airbag device provided near the tip of the front fork, disclosed for instance in JP 4052531, JP-A No. 2007-69699 and in FR 2936470 according to the preamble of claim 1. An alternative placement of sensors is shown in US 2008/0238056.

As shown in Fig. 3 and Fig. 5 of JP 4052531, a front fork 4 for supporting a front wheel 6 is disposed in the front part of the body, and a sensor 32 for detecting acceleration or deceleration in a vehicle collision is provided near the tip of this front fork 4. In particular, the sensor 32 is arranged within the axle 31 for the front wheel 6 disposed in the front fork 4. By positioning the sensor 32 near the tip of the front fork 4 in this way, it is possible to immediately detect acceleration or deceleration at the time of vehicle collision.

In this prior art, the impact detecting sensor is positioned within an axle cylinder. As it is thus positioned near the steering axis line of the front fork 4, in a frontal collision the impact transmitted from the front wheel 6 via the axle 31 can be sensitively detected while the steering components are moved.

Meanwhile, an airbag device requires a mechanical safetying sensor or an electronic safetying system intended to prevent the airbag from being deployed by an erroneous action of the sensor or the microcomputer that generates an airbag driving signal.

As shown in Fig. 3, Fig. 4 and Fig. 5 of JP-A No. 2007-69699, left and right front forks 1 for supporting a front wheel 2 are disposed in the front part of the body, and main sensors 11 for detecting acceleration or deceleration at the time of a vehicle collision are provided on these front forks 1. Furthermore, a sub-sensor 12 is provided integrally with the left and right front forks 1 above the main sensor 11 or behind a cross member 40 laid between the left and right front forks 1.

The intention is to prevent the airbag from being erroneously deployed by faulty operation of a single sensor, by subjecting output signals of the main sensor 11 and the sub-sensor 12 to collision determination by an operation control section 10 in accordance with the flow chart of Fig. 10.

In this prior art, since an impact detecting sensor (main sensor 11) is positioned on each of the left and right front forks 1, and their signals are averaged for use in collision determination, in frontal collision the impact transmitted from the front wheel via the axle can be sensitively detected while the steering components are moved.

Moreover, as the sub-sensor 12 is similarly positioned on the front forks 1 or the cross member 40, unless both the main sensor 11 and the sub-sensor 12 positively determine collision, no deployment signal is issued to the airbag. Thus, the airbag is prevented from being erroneously deployed even if either sensor fails to function and an ON determination is made.

According to JP 4052531, the sensor 32 is disposed within the axle 31, and so its shape is determined by the external diameter of the axle 31 among other factors. As a result, it becomes a dedicated component of the pertinent vehicle, and is expensive.

Further, as the sensor 32 and a collision judging unit 16 disposed on the body side are some distance from each other, the overall length of a harness connecting the sensor 32 and collision judging unit 16 is extended and, moreover, as the wiring is bent considerably when the handlebar is steered, an expensive harness that can endure considerable bending is required.

Furthermore, though the sensor 32 fitted to the front fork 4 can immediately detect the collision of the front wheel for instance, it also detects acceleration in the longitudinal direction when the front wheel rides over a gap (such as a pothole in the road) during normal running for example, and consideration should be given to preventing this detection from affecting the working of the airbag.

According to JP-A No. 2007-69699, the main sensor 11 and the sub-sensor 12 are arranged on the front forks 1, where the available fitting space is limited by, amongst other things, the brake caliper and the front fender. As a result, the freedom of arrangement is restricted. Moreover, one main sensor 11 on each of the left and right sides and one sub-sensor 12 on each of the left and right sides or one on the cross member 40 are required, so that at least three sensors are needed and the number of parts is large, resulting in increased cost.

It would be desirable to provide an airbag device for saddle-ride type vehicles which has increased freedom of arrangement and versatility of sensors, allows a reduction in the length of the harness to be connected to the sensors, does not require the harness to be particularly durable against bending, and moreover has sensors which are not affected (or hardly affected) by external disturbances that could affect the working of the airbag.

According to a first aspect of the present invention, there is provided an airbag device for a saddle-ride type vehicle with a head pipe and left and right frame members extending back obliquely downward from the head pipe; said airbag device comprising: an airbag for protecting a rider; and a pair of left and right detecting means for detecting a vehicle impact to actuate the airbag, the detecting means being provided on the left and right frame members and arranged between the head pipe and a rider's seating position; wherein the airbag device is provided with a control unit for controlling the deployment of an airbag, and the control unit is disposed in the vicinity of a centre of the body of the vehicle.

As the detecting means are provided on the frame members, the freedom of arrangement of the detecting means can be made greater when compared to the front fork provided with a brake caliper, a front fender and the like.

Also, the distance between the detecting means and a control unit for controlling the deployment of the airbag can be reduced, enabling the harness for connection between the detecting means and the control unit to be shortened.

As a result, the harness can be made less susceptible to wire disconnection and wiring can be made more easy and, furthermore, there is no need to use an expensive harness that is particularly durable against bending, making it possible to reduce the cost and enhance reliability and productivity.

Furthermore, there is no need to provide a detecting means of a specific shape or a fitting part whose shape is specific to each individual vehicle type, enabling greater versatility of the detecting means to be achieved.

Also, the disposition of the detecting means in the frame members results in a comparatively smaller influence on the outputs of the detecting means when the wheel rides over a gap than when they are disposed in the front fork, making it easier to take into account the influence on the actuation of the airbag.

Further, as the pair of left and right detecting means is arranged between the head pipe and a rider's seating position, it is possible to arrange the detecting means in the vicinity of the centre of gravity of the body of the vehicle, allowing the deceleration behaviour in the longitudinal direction of the body to be detected directly and more accurately.

Therefore, it is possible to ensure to a high level of accuracy that the airbag is deployed without fail when the deployment is required and is prevented from deployment without fail when the airbag deployment is unnecessary.

In addition, the arrangement of the detecting means and the control unit close to each other in the vicinity of the centre of the gravity of the body enables the distance between the control unit and the detecting means to be reduced, thereby enabling the harness for connection between the control unit and the detecting means to be shortened. Also, it is easier to fix the harness between the control unit and the detecting means, making a harness particularly durable against bending unnecessary.

Preferably, each frame member comprises a main frame extending backward from the head pipe and a pivot frame connected behind the main frame, and the detecting means are disposed in the frame members between the head pipe and pivot shaft fitting holes in the pivot frames.

Thus, the detecting means can be arranged in highly rigid frame members, enabling the deceleration behaviour of the body to be detected accurately.

Preferably, an airbag module provided with the airbag and the control unit are disposed between the head pipe and the pivot shaft fitting holes.

It is then possible to arrange the airbag module and the control unit inside the frame members and thereby to protect the airbag module and the control unit.

In a preferred form, the left detecting means is provided on an inner face of the left frame member in the direction of width of the vehicle, and the right detecting means is provided on an inner face of the right frame member in the direction of width of the vehicle.

It is then possible to protect the detecting means with the frame members, making any separate protective means for the detecting means unnecessary.

In a further preferred form, fitting stays are fitted to the frame members, and the detecting means are fitted to the rear of the fitting stays.

As a result, the fastening members for fitting the detecting means to the fitting stays can be made difficult to loosen. Also, as the fitting stays are arranged ahead of the detecting means, protection can be provided by the fitting stays from spattered stones or the like from ahead.

Preferably, the detecting means are symmetrically arranged left and right with respect to a body centre line.

Thus, a value averaging the acceleration outputs of the left and right detecting means constitutes the acceleration of the central part of the body, and any impact in the longitudinal direction of the body can be detected accurately.

Preferably, the control unit determines, on the basis of outputs of the detecting means and vehicle speed, any collision of the vehicle by multiple determination methods matching the vehicle speed and controls the deployment of the airbag.

With this arrangement, the most suitable determination method finely tuned to the vehicle speed can be set, enabling collision determination of the vehicle to be accomplished quickly.

Therefore, the airbag can be promptly deployed at a timing comparable to what is achieved when the detecting means are arranged on the front fork arranged in the vicinity of the front wheel shaft, thereby making it possible to secure occupant protecting performance.

According to a further aspect of the present invention, there is provided a saddle-ride type vehicle comprising a head pipe, left and right frame members extending back obliquely downward from the head pipe, and an airbag device as described above.

Preferred embodiments of the invention will now be described by way of example only and with reference to the accompanying drawings, in which:
Fig. 1 is a side view of a saddle-ride type vehicle equipped with an airbag device according to the present invention;
Fig. 2 is a perspective view showing a body frame of the saddle-ride type vehicle;
Fig. 3 is a side view showing the body frame of the saddle-ride type vehicle;
Fig. 4 is a sectional view along line 4-4 in Fig. 3;

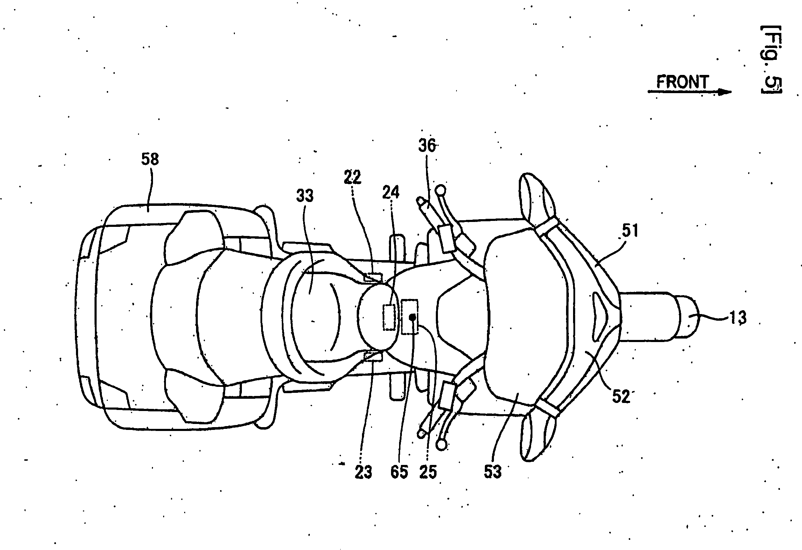

Fig. 5 is a plan of the saddle-ride type vehicle; and
Fig. 6 is a block diagram of the airbag device.

The terms "left", "right", "front" and "rear" as used in the description refer to the directions as viewed from a rider of the vehicle in normal use. Further, the drawings are supposed to be viewed in the directions of the reference signs, and the arrows marked "FRONT" in the drawings point ahead of the vehicle in normal use.

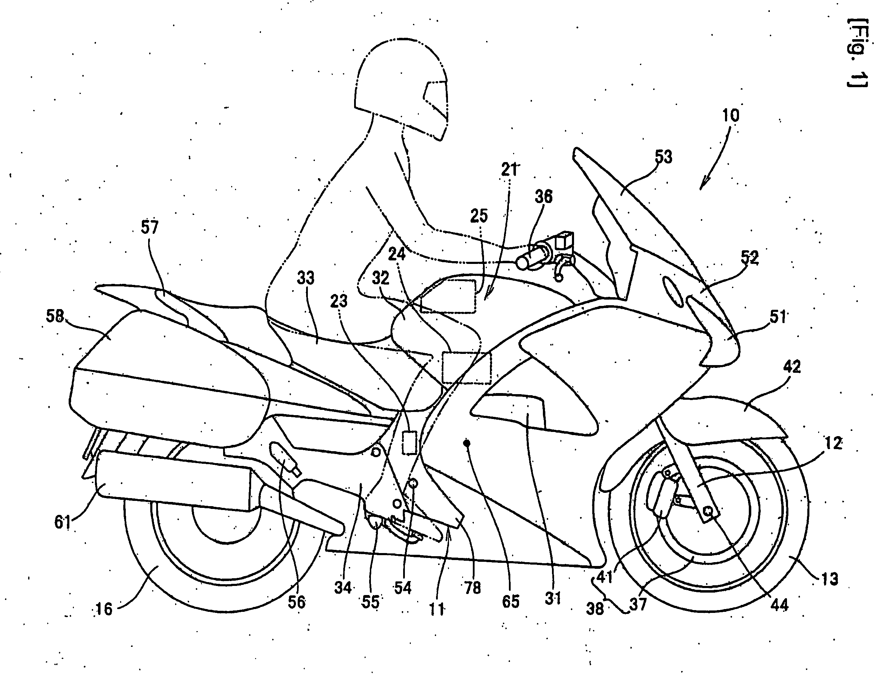

Figure 1 shows a saddle-ride type vehicle 10, which has a front wheel 13 fitted to the front part of a body frame 11 via a front fork 12, and a rear wheel 16 fitted to the rear lower part of the body frame 11 via a swing arm (not shown). The vehicle has an airbag device 21 in the central part of the body.

The body frame 11 has an engine 31 fitted to the front lower part and a fuel tank 32 fitted to the front upper part, and a seat 33 fitted to the rear upper part and a step bracket 34 fitted to the rear lower part.

The front fork 12 has a handlebar 36 fitted to the upper end, the front wheel 13 fitted to the lower end, a front wheel disk brake 38 formed from a brake caliper 41 together with a brake disk 37 fitted to the front wheel 13, and a front fender 42 covering the front wheel 13 from above. Further, a reference sign 44 denotes the axle of the front wheel 13.

In the drawings, a reference sign 51 denotes a headlamp; 52, a front cowl; 53, a windscreen; 54, a pivot shaft fitted to the body frame 11 to support the swing arm; 55, a rider's step; 56, a pillion passenger's step; 57, a grab rail; 58, a rear side storage box; and 61, a muffler.

The airbag device 21 includes a pair of left and right acceleration sensors 22 and 23 for detecting the acceleration or deceleration of the body (only the sensor 23 nearer the viewer is shown in Figure 1), an ECU (Electronic Control Unit) 24 to which detection signals from these acceleration sensors 22 and 23 are inputted, and an airbag module 25 provided with an airbag which is deployed in accordance with an output signal from the ECU 24.

The acceleration sensors 22 and 23 are fitted to a pair of left and right pivot frames 77 and 78 constituting the body frame 11. Only the pivot frame 78 nearer the viewer is shown in Figure 1.

The ECU 24 is fitted to the body frame 11 and is arranged in the vicinity of the centre of gravity 65 of the motorcycle 10, namely the centre of gravity 65 of the body.

The airbag module 25 includes the folded and stored airbag and an inflator that generates gas for deploying the airbag, and is arranged in a space disposed above the fuel tank 32.

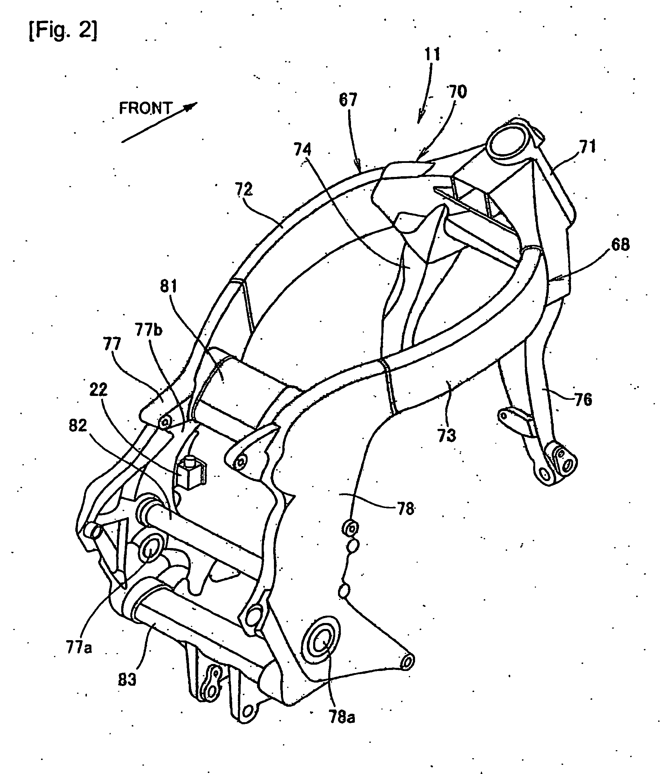

As shown in Fig. 2, a main frame part 70 constituting the body frame 11 includes a head pipe 71 for steerably supporting the front fork 12, a pair of left and right main frames 72 and 73 extending back and obliquely downward from the head pipe 71, a pair of left and right down frames 74 and 76 extending downwardly from the lower parts of the front ends of the main frames 72 and 73, a pair of left and right pivot frames 77 and 78 extending back and down from the rear ends of the main frames 72 and 73, and cross members 81, 82 and 83 linking the pivot frames 77 and 78. Reference signs 77a and 78a denote pivot shaft fitting holes provided in the pivot frames 77 and 78, respectively, in which the pivot shaft 54 can be fitted.

The left main frame 72 and pivot frame 77 form a side frame member 67, the right main frame 73 and pivot frame 78 form a side frame member 68, and the side frame members 67 and 68 extend continuously from the head pipe 71.

The acceleration sensors 22 and 23 (only one sensor 22 is shown in Figure 2) are fitted to inner faces 77b and 78b (only one inner face 77b is shown in Figure 2) of the left and right pivot frames 77 and 78, respectively.

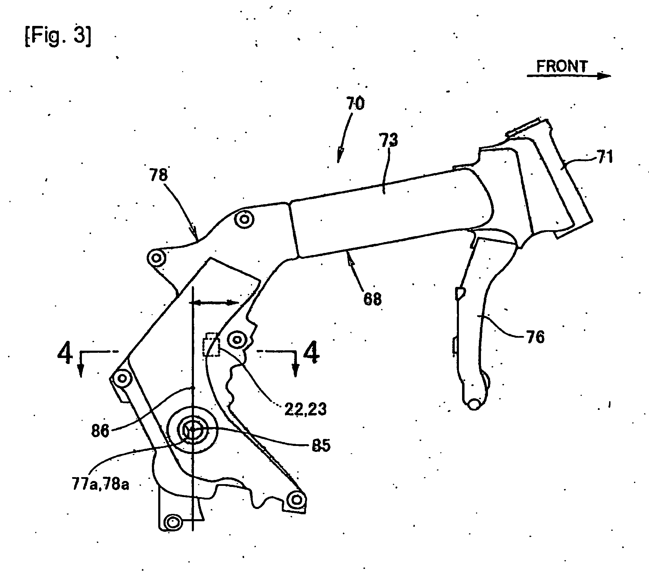

As shown in Fig. 3, the acceleration sensors 22 and 23 are arranged in front of a vertical plane (denoted by reference numeral 86) passing through the axis 85 of the pivot shaft 54.

Further, the acceleration sensors 22 and 23, which can detect accelerations and decelerations in the directions represented by arrows in Figure 3 (that is, in the longitudinal direction of the body), can detect the level of impact resulting from collision of the motorcycle 10 against another vehicle or the like.

By limiting the direction of acceleration detected by the acceleration sensors 22 and 23 to the longitudinal directions of the vehicle in this way, the sensors are made less susceptible to the effects of toppling of the vehicle (in the transverse direction of the body) or of oscillation of the body caused by the ruggedness of the road surface (in the vertical direction of the body).

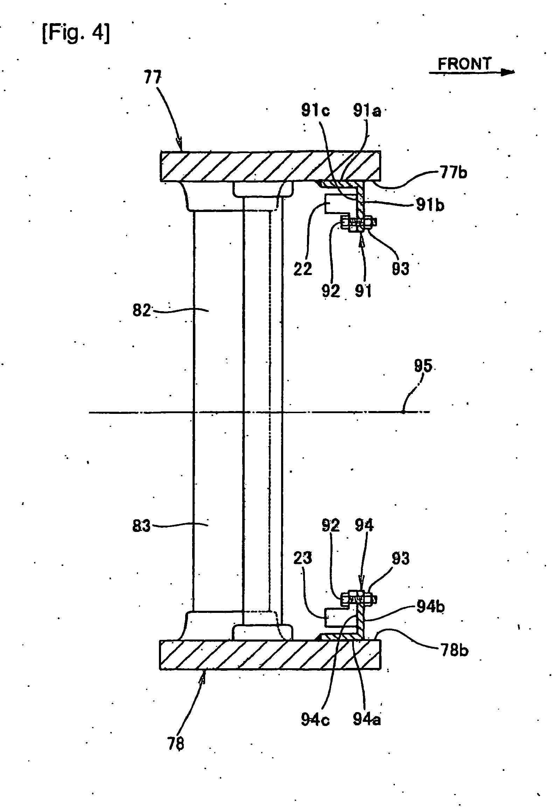

As shown in Fig. 4, a fitting stay 91 having an L-shaped cross-section is attached to an inner face 77b of the left pivot frame 77, for example by welding, and the acceleration sensor 22 is fitted to the fitting stay 91, in this embodiment with a bolt 92 and a nut 93.

The fitting stay 91 includes a fitting part 91 a attached to the inner face 77b of the pivot frame 77, and an integral part 91 b which extends inwardly in the direction of width of the vehicle from the front end of the fitting part 91a. The acceleration sensor 22 is fitted to the rear face 91 c of the inwardly extending part 91b.

Similarly, a fitting stay 94 having an L-shaped cross-section is attached to an inner face 78b of the right pivot frame 78, for example by welding, and the acceleration sensor 23 is fitted to the fitting stay 94, in this embodiment with a bolt 92 and the a 93.

The fitting stay 94 includes a fitting part 94a attached to the inner face 78b of the pivot frame 78, and an integral part 94b extending inwardly in the direction of width of the vehicle from the front end of the fitting part 94a. The acceleration sensor 23 is fitted to the rear face 94c of the inward extending part 94b.

The left and right acceleration sensors 22 and 23 are arranged symmetrically with respect to a longitudinal centre line 95 of the body of the motorcycle 10 (see Fig. 1). This enables accelerations on the body centre line 95 to be calculated by averaging the outputs of the acceleration sensors 22 and 23.

Further, separate fitting of the acceleration sensors 22 and 23 to the rear faces 91 c and 94c of the fitting stays 91 and 94 means that any external forces acting on the acceleration sensors 22 and 23 in the longitudinal direction when the vehicle decelerates are borne by the fitting stays 91 and 94, and no external force acts in the axial direction of the bolts 92 and the nuts 93, so that the bolts 92 and the nuts 93 are less prone to loosening.

Since both the acceleration sensors 22 and 23 and the ECU 24 are arranged in the vicinity of the centre of gravity 65 of the vehicle, the distance between the acceleration sensors 22 and 23 and the ECU 24 is reduced, and the overall length of the harness connecting the acceleration sensors 22 and 23 and the ECU 24 can also be reduced.

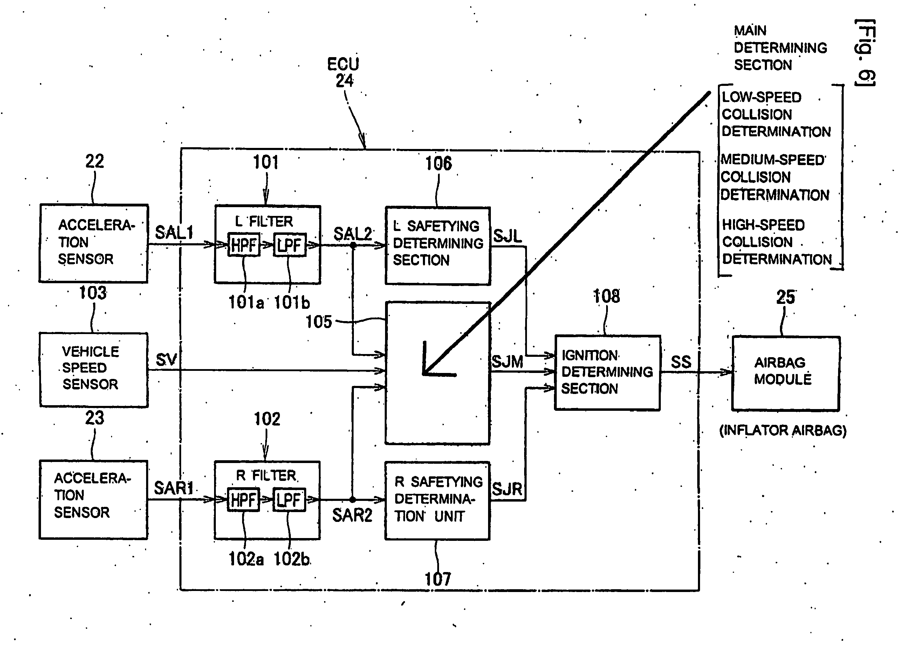

As shown in Fig. 6, the ECU 24 includes a left (L) digital filter 101 to which a left acceleration signal SAL1 from the acceleration sensor 22 is inputted; a right (R) digital filter 102 to which a right acceleration signal SAR1 from the acceleration sensor 23 is inputted; a main determining section 105 which determines whether or not the vehicle has collided on the basis of a left acceleration signal SAL2 and a right acceleration signal SAR2 having passed L filter 101 and R filter 102, respectively, and a vehicle speed signal SV from a vehicle speed sensor 103; an L safetying determining section 106 and an R safetying determining section 107 each of which independently determines whether or not the vehicle has collided on the basis of the left acceleration signal SAL2 which has passed the L filter 101 and the right acceleration signal SAR2 which has passed the R filter 102; and an ignition determining section 108 which outputs an ignition signal SS to the airbag module 25 on the basis of all the determination signals SJM, SJL and SJR respectively outputted from the main determining section 105, the L safetying determining section 106 and the R safetying determining section 107 to determine whether or not to ignite an inflator in the airbag module 25.

The L filter 101 and the R filter 102 are each provided with high-pass filters 101 a and 102a for removing drift components contained in the left acceleration

signal SAL1 and the right acceleration signal SAR1, and low-pass filters 101 b and 102b for removing high-frequency components (for instance, of or above 100 Hz), which are unnecessary for determination of collision.

The vehicle speed sensor 103 is a sensor for detecting the revolution speed (wheel speed) of the front wheel 13 and/or the rear wheel 16 of the motorcycle 10, and the vehicle speed is calculated from this wheel speed. The vehicle speed signal may instead be obtained from an engine control unit that controls the engine 31, instead of the vehicle speed sensor 103.

The main determining section 105 is a block that determines whether or not the vehicle has collided on the basis of the vehicle speed signal SV and the average of the left acceleration signal SAL2 and the right acceleration signal SAR2, and outputs a signal corresponding to the result of this determination. The main determining section 105 includes a low-speed collision determining section, a medium-speed collision determining section, a high-speed collision determining section, a threshold calculating section and a main OR circuit.

When any of the low-speed collision determining section, the medium-speed collision determining section and the high-speed collision determining section has determined that a collision has occurred, a determination signal SJM is outputted from the main OR circuit.

The low-speed collision determining section is a block that determines whether or not the vehicle has run into a low-speed collision on the basis of the average of the left acceleration signal SAL2 and the right acceleration signal SAR2. It cumulatively integrates all the time the averages of the left acceleration signal SAL2 and the right acceleration signal SAR2 and determines that a collision has occurred if the integrated value surpasses a threshold.

As the low-speed collision determining section constantly cumulatively integrates acceleration signals, acceleration signals arising from factors other than collision, such as sudden acceleration or sudden deceleration, are also accumulated. To eliminate this inconvenience, such accelerations as would be detected at the time of sudden acceleration or sudden deceleration, not collision, are subtracted from the acceleration signals, and the balances are cumulatively integrated.

Since it is possible to grasp a collision event for a long period (i.e. the whole collision event) by low-speed collision determination, this is suitable for making distinction between, for instance, light collision against another vehicle whose rigidity is high (a short-period collision for which the detected acceleration is high but where deployment of the airbag is not required) and low-speed collision against another vehicle whose rigidity is low (a long-period collision for which the detected acceleration is low but deployment of the airbag is required).

The medium-speed collision determining section is a block that determines whether or not the vehicle has run into a medium-speed collision on the basis of the average between the left acceleration signal SAL2 and the right acceleration signal SAR2.

It integrates the left acceleration signals SAL2 and the right acceleration signals SAR2 always in a constant time range, and determines that a collision has occurred if the integrated value surpasses a threshold.

The time range of integration being represented by Δt, the integral to be used at a certain point of time T is the result of integration of acceleration signals from T-Δt until T.

Although medium-speed collision determination is more difficult to grasp the whole collision event than low-speed collision determination, it is easier to grasp the collision event than high-speed collision determination to be described next, and allows collision determination in a shorter period of time than low-speed collision determination.

The high-speed collision determining section is a block that determines whether or not the vehicle has run into a high-speed collision on the basis of the average between the left acceleration signal SAL2 and the right acceleration signal SAR2.

It averages in a constant time range the averages of the left acceleration signals SAL2 and the right acceleration signals SAR2, and further determines that a collision has occurred if a variation of this average in a certain length of time surpasses a threshold.

Since determination is made in high-speed collision determination on the basis of the variation of acceleration, it is easier to grasp body acceleration which abruptly rises when, for instance, the vehicle has collided with another vehicle of high rigidity at high speed, and to make determination more sensitive to the rise of impact at an earlier timing.

The L safetying determining section 106 and the R safetying determining section 107 are blocks for preventing the airbag from being operated erroneously even if either the acceleration sensor 22 or the acceleration sensor 23 works wrongly with the consequence that, even though no collision has occurred, the main determining section 105 outputs a signal informing of collision occurrence.

Each of the L safetying determining section 106 and the R safetying determining section 107 independently integrates the values of the left acceleration signal SAL2 and the right acceleration signal SAR2 always in a constant time range, and outputs the determination signal SJL or the determination signal SJR when the integral has surpassed a threshold.

The ignition determining section 108 determines whether or not the inflator of the airbag module 25 should be ignited on the basis of the determination signals SJM, SJL and SJR and, if the determination is ON, outputs the ignition signal SS to the inflator of the airbag module 25 or, if the determination is OFF, does not output the ignition signal SS.

Returning to Fig. 4, disadvantages of equipping the pivot frames 77 and 78 with the acceleration sensors 22 and 23 include, firstly, a delay in the time of detecting any acceleration compared with the existing arrangement of acceleration sensors on the front fork in the vicinity of the front wheel shaft, and, secondly, the acceleration sensors 22 and 23, which are positioned closer to the engine 31, become more susceptible to the influences of engine vibration and electrical noise such as ignition pulses.

The first disadvantage is addressed by implementing a determination method using multiple logics (low-speed collision determination, medium-speed collision determination and high-speed collision determination) by the main determining section 105 for collision determination, which makes possible collision determination finely in response to the vehicle speed, enabling the airbag to be promptly deployed at a timing comparable to what is achieved when the acceleration sensors are arranged on the front fork in the vicinity of the front wheel shaft, to thereby secure rider protection.

The second disadvantage is addressed by equipping the airbag device 21 with the digital L filter 101 and the digital R filter 102. It is then possible to remove high-frequency components including engine vibration and electrical noise with a low-pass filter and to remove low-frequency components including low acceleration signals and drift at the time of the vehicle's acceleration or deceleration with a high-pass filter, enabling the accuracy of collision determination to be enhanced and the threshold of collision determination to be lowered.

Further advantageous effects of the present invention resulting from the pivot frames 77 and 78 with the pair of acceleration sensors 22 and 23 include the following.
(1) As the sensors are positioned where there is more space than in the existing front fork provided with a brake caliper, a front fender and the like, the freedom of arrangement of the acceleration sensors 22 and 23 can be dramatically increased.
(2) By averaging the outputs of the pair of left and right acceleration sensors 22 and 23, the acceleration in the central part of the body in the direction of width of the vehicle, which would be otherwise difficult to measure, can be calculated and acceleration data in the vicinity of the centre of gravity of the body are thereby made available.
(3) In the event of the failure of one acceleration sensor to function normally, the other acceleration sensor can still detect acceleration to enable collision determination to be made. This enables the airbag device 21 to be more reliable than where only one acceleration sensor is provided.
(4) The distance between the ECU 24 of the airbag arranged in the central part of the body and the acceleration sensors 22 and 23 can be reduced, enabling the harness for connection between the ECU 24 and the acceleration sensors 22 and 23 to be shortened.
(5) There is no need to provide an acceleration sensor and an acceleration sensor of dedicated shape for each individual vehicle type, enabling greater versatility to be achieved.
(6) In contrast to the arrangement where the front fork is equipped with acceleration sensors, unnecessary acceleration detection, such as would occur when the front wheel 13 rides over a gap, can be eliminated.
(7) The acceleration sensors 22 and 23 can be protected by the pivot frames 77 and 78, other frame members linked to the pivot frames 77 and 78, and parts fitted to the pivot frames 77 and 78.

As shown in Figs. 1, 2 and 4 above, the airbag device 21 for the saddle-ride type vehicle 10, provided with the head pipe 71 for turnably supporting the handlebar 36 and the side frame members 67 and 68 extending back obliquely downward from the head pipe 71, includes the acceleration sensors 22 and 23 as detecting means for detecting impacts working on the body to actuate the airbag device 21, and is **characterized in that** the left and right acceleration sensors 22 and 23 are provided in the side frame members 67 and 68 (in more detail the pivot frames 77 and 78).

As the side frame members 67 and 68 are provided with the pair of left and right acceleration sensors 22 and 23, the freedom of arrangement of the acceleration sensors 22 and 23 can be made greater than when the sensors are disposed in the existing front fork provided with a brake caliper, a front fender and the like.

Also, the distance between the acceleration sensors 22 and 23 and the ECU 24 as the control unit for controlling the deployment of the airbag can be reduced, enabling the harness for connection between the acceleration sensors 22 and 23 and the ECU 24 to be shortened.

As a result, the harness can be made less susceptible to wire disconnection and easier wiring is permitted. Furthermore, there is no need to use an expensive harness that is particularly durable against bending, making it possible to reduce the cost and enhance reliability and productivity.

Moreover, there is no need to provide the acceleration sensors 22 and 23 with a specific shape, or to provide a fitting part with a shape specific to each individual vehicle type, enabling the versatility of the acceleration sensors 22 and 23 to be enhanced.

Furthermore, the disposition of the acceleration sensors 22 and 23 in the side frame members 67 and 68 results in a smaller influence on the outputs of the acceleration sensors 22 and 23 when the front wheel 13 rides over a gap than where they are disposed in the front fork, making it easier to take into account the influence on the operation of the airbag.

Since the pair of left and right acceleration sensors 22 and 23 is arranged between the head pipe 71 and the rear part of the seat 33 as shown in Fig. 1, it is possible to arrange the acceleration sensors 22 and 23 in the vicinity of the centre of gravity of the body, to detect the deceleration behaviour of the body directly and more accurately.

Therefore, it is possible to ensure to a high level of accuracy that the airbag is deployed without fail when the deployment is required, and is prevented from deployment when the airbag deployment is unnecessary.

Since the airbag device 21 is provided with the ECU 24 for controlling the deployment of the airbag and the ECU 24 is disposed in the vicinity of the centre of the body, as shown in Fig. 1 and Fig. 6, the distance between the ECU 24 and the acceleration sensors 22 and 23 can be shortened by arranging the acceleration sensors 22 and 23 and the ECU 24 in the vicinity of the centre of gravity of the body, and it is made possible to make the harness to connect these ECU 24 and acceleration sensors 22 and 23 less susceptible to wire disconnection. Also, it is made easier to fix the harness between the ECU 24 and the acceleration sensors 22 and 23, making the use of a harness which is particularly durable against bending unnecessary.

Since a pair of left and right side frame members 67 and 68 is provided, and the acceleration sensors 22 and 23 are fitted to the inner sides of the side frame members 67 and 68 as shown in Fig. 2 and Fig. 4, the acceleration sensors 22 and 23 can be protected by the side frame members 67 and 68, making any separate protective means for the acceleration sensors 22 and 23 unnecessary.

Since the fitting stays 91 and 94 are fitted to the side frame members 67 and 68 and the acceleration sensors 22 and 23 are fitted to these fitting stays 91 and 94 from behind as shown in Fig. 4, fastening members (the bolts 92 and nuts 93) for fitting the acceleration sensors 22 and 23 to the fitting stays 91 and 94 can be made difficult to loosen.

Also, as the acceleration sensors 22 and 23 are symmetrically arranged left and right with respect to the body centre line 95, a value averaging the acceleration outputs of the left and right acceleration sensors 22 and 23 constitutes the acceleration of the central part of the body, and any impact in the longitudinal direction of the body can be detected accurately.

Since the ECU 24, on the basis of the outputs of the acceleration sensors 22 and 23 and the vehicle speed, determines any collision of the vehicle by multiple determination methods matching the vehicle speed and controls the deployment of the airbag as shown in Fig. 6, the most suitable determination method finely can be set in response to the vehicle speed, enabling collision determination of the vehicle to be accomplished quickly.

Therefore, the airbag can be as promptly deployed at a timing comparable to what is achieved when the acceleration sensors are arranged on the front fork in the vicinity of the front wheel shaft, thereby making it possible to secure rider protecting performance.

To add, though the acceleration sensors 22 and 23 are disposed on the pivot frames 77 and 78 in the embodiment as shown in Fig. 4, this is not the only possible disposition, but they may as well be disposed on the left and right main frames 72 and 73 shown in Fig. 2.

The airbag device according to the present invention is highly suitable for saddle-ride type vehicles. The invention also extends to saddle-ride type vehicles having such an airbag device.

## Claims

1. An airbag device (21) for a saddle-ride type vehicle (10) with a head pipe (71) and left and right frame members (67, 68) extending back obliquely downward from the head pipe (71);
said airbag device (21) is provided with a control unit (24) for controlling the deployment of an airbag, said airbag device (21) comprises further
an airbag for protecting a rider; and
a pair of left and right detecting means (22, 23) for detecting a vehicle impact to actuate the airbag, **characterized in that** said detecting means (22, 23) are provided on the left and right frame members (67, 68) and arranged between the head pipe (71) and a rider's seating position;
wherein the control unit (24) is disposed in the vicinity of a centre of the body of the vehicle (10).

2. The airbag device for a saddle-ride type vehicle according to any preceding claim, wherein each frame member (67, 68) comprises a main frame (72, 73) extending backward from the head pipe (71) and a pivot frame (77, 78) connected behind the main frame (72, 73), and
the detecting means (22, 23) are disposed in the frame members (67, 68) between the head pipe (71) and pivot shaft fitting holes (77a, 78a) in the pivot frames (77, 78).

3. The airbag device for a saddle-ride type vehicle according to claim 1 or claim 2, wherein an airbag module (25) provided with the airbag and the control unit (24) are disposed between the head pipe (71) and the pivot shaft fitting holes (77a, 78a).

4. The airbag device for a saddle-ride type vehicle according to any preceding claim, wherein the left detecting means (22) is provided on an inner face of the left frame member (67) in the direction of width of the vehicle, and the right detecting means (23) is provided on an inner face of the right frame member (68) in the direction of width of the vehicle.

5. The airbag device for a saddle-ride type vehicle according to any preceding claim, wherein fitting stays (91, 94) are fitted to the frame members (67, 68), and the detecting means (22, 23) are fitted to the rear of the fitting stays (91, 94).

6. The airbag device for a saddle-ride type vehicle according to any preceding claim, wherein the detecting means (22, 23) are symmetrically arranged left and right with respect to a body centre line.

7. The airbag device for a saddle-ride type vehicle according to any preceding claim, wherein the control unit (24) determines, on the basis of outputs of the detecting means (22, 23) and vehicle speed, whether a vehicle collision has taken place by multiple determination methods matching the vehicle speed, and controls the deployment of the airbag.

8. A saddle-ride type vehicle (10) comprising a head pipe (71), left and right frame members (67, 68) extending back obliquely downward from the head pipe (71), and an airbag device (21) as claimed in any preceding claim.

## Patentansprüche

1. Airbagvorrichtung (21) für ein Fahrzeug mit einem Sattel (10) mit einem Lenkkopf (71) und linken und rechten Rahmenelementen (67, 68), die sich nach hinten und schräg nach unten von dem Lenkkopf (71) aus erstrecken;
wobei die Airbagvorrichtung (21) mit einer Steuereinheit (24) zum Steuern der Entfaltung eines Airbags versehen ist, wobei die Airbagvorrichtung (21) des Weiteren umfasst:
einen Airbag zum Schützen eines Fahrers; und
ein Paar linke und rechte Erfassungsmittel (22, 23) zum Erfassen eines Fahrzeugaufpralls, der den Airbag auslösen wird, **dadurch gekennzeichnet, dass** die Erfassungsmittel (22, 23) an den rechten und linken Rahmenelementen (67, 68) zur Verfügung gestellt sind und zwischen dem Lenkkopf (71) und einer Sitzposition eines Fahrer angeordnet sind;
wobei die Steuereinheit (24) in der Nähe einer Mitte der Karosserie des Fahrzeugs (10) angeordnet ist.

2. Airbagvorrichtung für ein Fahrzeug mit einem Sattel nach dem vorhergehenden Anspruch, wobei jedes Rahmenelement (67, 68) einen Hauptrahmen (72, 73), der sich von dem Lenkkopf (71) aus nach hinten erstreckt, und einen Schwingrahmen (77, 78) umfasst, der sich nach dem Hauptrahmen (72, 73) anschließt, und
die Erfassungsmittel (22, 23) in den Rahmenelementen (67, 68) zwischen dem Lenkkopf (71) und den Montagelöchern (77a, 78a) für die Schwingachse im Schwingrahmen (77, 78) angeordnet sind.

3. Airbagvorrichtung für ein Fahrzeug mit einem Sattel nach Anspruch 1 oder Anspruch 2, wobei ein Airbagmodul (25), das mit dem Airbag ausgestattet ist, und die Steuereinheit (24) zwischen dem Lenkkopf (71) und den Montagelöchern (77a, 78a) für die Schwingachse angeordnet sind.

4. Airbagvorrichtung für ein Fahrzeug mit Sattel nach irgendeinem vorhergehenden Anspruch, wobei die linken Erfassungsmittel (22) an einer Innenseite des linken Rahmenelements (67) in der Breitenausrichtung des Fahrzeugs vorgesehen sind und die rechten Erfassungsmittel (23) an einer Innenseite des rechten Rahmenelements (68) in der Breitenausrichtung des Fahrzeugs vorgesehen sind.

5. Airbagvorrichtung für ein Fahrzeug mit einem Sattel nach irgendeinem vorhergehenden Anspruch, wobei Montagehalterungen (91, 94) an den Rahmenelementen (67, 68) angebracht sind und die Erfassungsmittel (22, 23) an der Rückseite der Montagehalterungen (91, 94) angebracht sind.

6. Airbagvorrichtung für ein Fahrzeug mit einem Sattel nach irgendeinem vorhergehenden Anspruch, wobei die Erfassungsmittel (22, 23) symmetrisch links und rechts im Verhältnis zu einer Karosseriemittelinie angeordnet sind.

7. Airbagvorrichtung für ein Fahrzeug mit einem Sattel nach irgendeinem vorhergehenden Anspruch, wobei die Steuereinheit (24) auf der Grundlage von Ausgängen der Erfassungsmittel (22, 23) und einer Fahrzeuggeschwindigkeit durch zahlreiche zu der Fahrzeuggeschwindigkeit passende Bestimmungsverfahren bestimmt, ob eine Fahrzeugkollision stattgefunden hat, und die Entfaltung des Airbags steuert.

8. Fahrzeug (10) mit einem Sattel, umfassend einen Lenkkopf (71), linke und rechte Rahmenelemente (68, 71), die sich nach hinten und schräg nach unten von dem Lenkkopf (71) aus erstrecken, und eine Airbagvorrichtung (21) wie in irgendeinem vorhergehenden Anspruch beansprucht.

## Revendications

1. Dispositif de coussin gonflable (21) pour un véhicule de type à enfourcher (10) avec une tubulure de refoulement (71) et des organes de cadre gauche et droit (67, 68) s'étendant vers l'arrière de façon oblique vers le bas depuis la tubulure de refoulement (71) ;
ledit dispositif de coussin gonflable (21) est pourvu d'une unité de commande (24) permettant de commander le déploiement d'un coussin gonflable, ledit dispositif de coussin gonflable (21) comprend en outre
un coussin gonflable permettant de protéger un motocycliste ; et
une paire de moyens de détection gauche et droit (22, 23) permettant de détecter un impact de véhicule afin d'activer le coussin gonflable, **caractérisé en ce que** lesdits moyens de détection (22, 23) sont disposés sur les organes de cadre gauche et droit (67, 68) et agencés entre la tubulure de refoulement (71) et une position assise du motocycliste ;
dans lequel l'unité de commande (24) est disposée au voisinage d'un centre de la caisse du véhicule (10).

2. Dispositif de coussin gonflable pour un véhicule de type à enfourcher selon l'une quelconque des revendications précédentes, dans lequel chaque organe de cadre (67, 68) comprend un cadre principal (72, 73) s'étendant vers l'arrière depuis la tubulure de refoulement (71) et un cadre-pivot (77, 78) raccordé derrière le cadre principal (72, 73) ; et
les moyens de détection (22, 23) sont disposés dans les organes de cadre (67, 68) entre la tubulure de refoulement (71) et les orifices d'installation d'arbre de pivot (77a, 78a) dans les cadres-pivots (77, 78).

3. Dispositif de coussin gonflable pour un véhicule de type à enfourcher selon la revendication 1 ou la revendication 2, dans lequel un module de coussin gonflable (25) pourvu du coussin gonflable et l'unité de commande (24) sont disposés entre la tubulure de refoulement (71) et les orifices d'installation d'arbre de pivot (77a, 78a).

4. Dispositif de coussin gonflable pour un véhicule de type à enfourcher selon l'une quelconque des revendications précédentes, dans lequel le moyen de détection gauche (22) est disposé sur une face interne de l'organe de cadre gauche (67) dans la direction de la largeur du véhicule, et le moyen de détection droit (23) est disposé sur une face interne de l'organe de cadre droit (68) dans la direction de la largeur du véhicule.

5. Dispositif de coussin gonflable pour un véhicule de type à enfourcher selon l'une quelconque des revendications précédentes, dans lequel des entretoises d'ajustement (91, 94) sont ajustées sur les organes de cadre (67, 68), et les moyens de détection (22, 23) sont ajustés à l'arrière des entretoises d'ajustement (91, 94).

6. Dispositif de coussin gonflable pour un véhicule de type à enfourcher selon l'une quelconque des revendications précédentes, dans lequel les moyens de détection (22, 23) sont agencés symétriquement à gauche et à droite par rapport à une ligne centrale de caisse.

7. Dispositif de coussin gonflable pour un véhicule de type à enfourcher selon l'une quelconque des revendications précédentes, dans lequel l'unité de commande (24) détermine, sur la base de sorties des moyens de détection (22, 23) et de la vitesse du véhicule, si une collision de véhicule a eu lieu par de multiples méthodes de détermination concordant avec la vitesse du véhicule, et commande le déploiement du coussin gonflable.

8. Véhicule de type à enfourcher (10) comprenant une tubulure de refoulement (71), des organes de cadre gauche et droit (67, 68) s'étendant vers l'arrière de façon oblique vers le bas depuis la tubulure de refoulement (71), et un dispositif de coussin gonflable (21) tel que revendiqué dans l'une quelconque des revendications précédentes.
